# EUROPEAN PATENT SPECIFICATION

(11) **EP 0 824 573 B1**
(45) Date of publication and mention of the grant of the patent: **06.12.2000**
(21) Application number: 96913260.4
(22) Date of filing: 29.04.1996
(51) Int. Cl.: C09D 133/06, C09D 167/00, C09D 175/04, C08G 18/40

(54) **SCRATCH-RESISTANT COATING COMPOSITION**
KRATZFESTE BESCHICHTUNGSZUSAMMENSETZUNG
COMPOSITION DE REVETEMENT RESISTANT AU RAYAGE

(30) Priority: 02.05.1995 US 433284
(43) Date of publication of application: 25.02.1998
(73) Proprietor: E.I. DU PONT DE NEMOURS AND COMPANY, Wilmington Delaware 19898 (US)
(72) Inventor: HUYBRECHTS, Jozef, B-2360 Oud-Turnhout (BE); KERNAGHAN, Stuart, Alexander, D-53129 Bonn (DE); VERVOORT, Robert, B-2100 Deurne-Antwerpen (BE)
(74) Representative: Kuhnen & Wacker
(86) International application number: US9605950
(87) International publication number: WO9634924

(56) References cited:
- EP-A- 0 653 468
- EP-A- 0 688 840
- US-A- 4 020 216
- US-A- 4 374 164
- US-A- 4 681 815

## Description

### BACKGROUND OF THE INVENTION

### FIELD OF THE INVENTION

This invention concerns a metal-coating composition containing acrylic polyol(s), polyester polyol(s) and a crosslinking agent.

### STATE OF THE ART

The coating composition of this invention is useful primarily on metallic-substrates, particularly on vehicles such as automobiles and trucks. Such coating will protect the substrate and provide an attractive aesthetic finish. A typical vehicle has several coating layers. The substrate is typically first coated with an inorganic rust-proofing zinc or iron phosphate layer over which is applied an electrocoated primer or repair primer. Optionally, a primer surfacer can be employed for better appearance and improved adhesion. A pigmented basecoat or colorcoat is next applied over the primer. A typical basecoat or colorcoat may contain metallic flakes to provide a metallic finish. To protect and preserve the aesthetic qualities of the color finish, a clear (unpigmented) topcoat is often applied over the pigmented basecoat to protect the basecoat even on prolonged weathering. Clearcoats are predominantly based on a technology where the binders are hydroxy functional acrylics crosslinked with alkoxylated melamine formaldehyde adducts. The coatings are typically baked at ±130°C after application wet-on-wet on a basecoat. Because of severe field complaints, the automobile coating industry is asking for improved scratch resistance of the clearcoats.

The composition of this invention has been found to provide particularly desirable scratch-resistance to the metallic substrate coating art. This improvement is in addition to attributes of good weatherability, chemical-resistance, water-resistance, etch-resistance and mechanical characteristics. This improved package of properties derives from the interrelationship of the selected acrylic and polyester polyols and the crosslinker selected for use therewith. Most particularly, the improved properties are derived from the dimer acid/alcohol component of the polyester polyol as will be described in more detail hereafter.

The coating composition of this invention is a crosslinkable binder in an organic solvent, the binder comprising the following components based on total weight of binder:
(i) 15 to 70 percent of an acrylic polyol having a weight average molecular weight of 2,500 to 40,000; a hydroxyl value of 50 to 180 mg KOH/g; and a glass transition temperature of between -30 to 70°C;
(ii) 5 to 60 percent of an optionally substituted polyester polyol having a weight average molecular weight of 2,000 to 80,000; and a hydroxyl value of 50 to 220 mg KOH/g; the optional substituent selected from at least one member of the group trialkoxysilyl and urethane;
   the polyol comprising at least 10 percent by weight of the hydrogenated reaction product of at least one of:
   a) dimer fatty acid and polyol,
   b) polyacid and dimer alcohol, and
   c) dimer fatty acid and dimer alcohol,
   wherein said dimer fatty acid and said dimer alcohol have at least 34 carbon atoms and said reaction product has at least two groups selected from acid and alcohol functionalities; and
(iii) 10 to 60 percent of a crosslinking agent selected from at least one of an alkoxylated melamine formaldehyde adduct and a polyisocyanate (which may be blocked);
   with the exception of coating compositions wherein component (ii) of the binder has been obtained by reacting the following components:
   (1) 0 to 30% by moles of one or more glycidyl esters of α,α-dialkylsubstituted monocarboxylic acids;
   (2) 10 to 40% by moles of one or more 2,2-dialkylalkane diols;
   (3) 10 to 30% by moles of one or more polyols having at least one secondary OH group in their molecules;
   (4) 20 to 50% by moles of one or more aliphatic and/or cycloaliphatic dicarboxylic acids having less than 16 carbon atoms or anhydrides thereof;
   (5) 5 to 30% by moles of one or more dimer fatty acids and/or dimer diols and/or epsilon-caprolactone;
   (6) 1 to 15% by moles of one or more hydroxycarboxylic acids having at least one hydroxyl group and at least one carboxylic group in their molecules;
   (7) 0 to 3% by moles of one or more alpha, beta-unsaturated dicarboxylic acids and anhydrides thereof;
the total of components (1) to (7) being 100% by moles.

The above disclaimer is based on the disclosure of EP-A-688 840, a document relevant under Art. 54(3) EPC.

Preferred compositions are those in which the acrylic polyol has a molecular weight of 3,000 to 10,000; a hydroxyl value of 80 to 150; and a glass transition temperature of -10 to 50°C. Also preferred are compositions in which the acrylic polyol contains at least one trialkoxysilyl or urethane group; in which the polyester polyol has a molecular weight of 2,500 to 15,000; a hydroxyl value of 100 to 170; and 30 to 60 percent, by weight of polyester polyol, of hydrogenated reaction product selected from a), b) and c); in which the polyester polyol contains substituents selected from at least one member of the group trialkoxysilyl and urethane; in which the binder comprises 20 to 85 percent by weight of the solvent plus binder; and in which the polyester polyol comprises at least 10 percent of hydrogenated reaction product.

Most preferred are compositions comprising acrylic and polyester polyols and alkoxylated melamine formaldehyde adducts in a one-package system. Such a system may contain a blocked polyisocyanate. Other compositions are two-package systems comprising the acrylic and polyester polyols in one package and an unblocked polyisocyanate in the second package. The coatings of this invention are useful in topcoats for metallic substrates that include vehicles and outdoor structures. The topcoats can be clear (without pigment) or they can contain pigment.

Each of the dimer fatty acid and dimer alcohols described in a), b) and c) have at least 34 carbon atoms. In addition, the hydrogenated reaction product of each of a), b) and c) can contain significant amounts of polyacids and polyalcohols such as trimer acids and trimer alcohols as will be appreciated by one skilled in the art.

The binders described herein improve clearcoat elasticity without negative impact on appearance and other properties. Appearance of a final colorcoat-clearcoat finish depends a great deal on attack by the clearcoat binders on the basecoat. It is known that polyester resins can attack basecoats much more than acrylics. This attack results in redissolution of the basecoat giving surface roughness, lower gloss and lower clarity of the final finish. This negative effect is more pronounced for oligomers due to low Mw and high hydroxyl values. Such hydroxylated polyesters, however, do increase the elasticity of the final crosslinked formulation which results in improved scratch resistance. The binders employed in the coatings described herein effect improved appearance (less basecoat attack) without negative impact on other clearcoat properties.

### The Acrylic Polyol (i)

The acrylic polyols can be obtained by copolymerizing hydroxyl-containing monomers such as hydroxyethyl acrylate, hydroxyethyl methacrylate, hydroxypropyl acrylate, hydroxypropyl methacrylate, hydroxybutyl acrylate, and the like, with other monomers typically employed in the synthesis of acrylic coating resins such as:
acrylic esters of C₁₋₁₈ monohydric alcohols such as methylacrylate, butylacrylate, 2-ethyl hexyl acrylate;
methacrylic esters of C₁₋₁₈ monohydric alcohols such as methyl methacrylate, butyl methacrylate, 2-ethyl hexyl methacrylate;
acrylic and methacrylic esters of cycloaliphatic monoalcohols such as cyclohexyl methacrylate, isobornyl methacrylate, trimethylcyclohexyl acrylate;
acrylic and methacrylic esters of aromatic monoalcohols such as phenyl methacrylate, benzyl acrylate;
vinylaromatics such as styrene, vinyl toluene, t-butylstyrene;
nitrile monomers such as acrylonitrile;
acid functional monomers such as itaconic acid, acrylic acid;
amide functional monomers such as methacrylamide, N-butoxymethyl methacrylamide;
silane functional monomers such as gamma-methacryloxypropyltriethoxysilane;
glycidyl functional monomers such as glycidyl methacrylate; and
other functional comonomers including acetoacetozyethylmethacrylate, methacryloxyethyl phosphoric acid, perfluoroalkylacrylates and methacrylates.
The acrylic polyol is prepared by conventional free radical-initiated polymerization in a solvent or solvent blend in the temperature range of 60° to 180°C. Typical solvents are aromatics, aliphatics, acetates, ketones, alcohols and ethers such as xylene, n-butanol, mineral spirits, methylethylketone and methyl isobutyl ketone.

Azo or peroxy initiators can be employed as polymerization initiators. Examples of azo initiators are the products sold under the trade name VAZO® (DuPont) induding VAZO® 67, VAZO® 88 and the like. Examples of peroxy initiators are peroxyethers, peroxyesters such as di-t-butylperoxide, t-butylperacetate, t-butylperoxy-2-ethylhexanoate, t-butylperoxy pivalate, di-t-amylperoxide and t-amylperacetate. Chain transfer agents can be utilized to control molecular weight. Examples of chain transfer agents are halogen and sulfur derivatives as 2-mercaptoethanol, tetrachloromethane and dodecylmercaptan.

The acrylic copolymers can be prepared in batch or feed processes. In feed processes the monomers, initiators and chain transfer agents can be fed simultaneously or in multifeed (skewfeed) type additions. The acrylic copolymer can be modified by the chemical grafting of derivatives on the backbone binder. Examples are the reactions of lactones, mono epoxyethers, mono epoxyesters, anhydrides, and mono acids with hydroxy, acid and epoxy functional groups; specifically ε-caprolactone, valerolactone with hydroxy functional groups; mono epoxyesters such as versatic acid mono epoxyester, pivalic acid mono epoxyester with acid functional groups; anhydrides such as maleic anhydride, phthalic anhydride with hydroxy functional groups, mono adds such as myristic acid, oleic acid, isononanoic acid with epoxy functional groups. These reactions can be accomplished during the polymerization. Another way of modifying the copolymer is by reaction of the functional monomer with the modifying compounds and further copolymerization with the other monomer mixture. For example, hydroxyethyl acrylate can be reacted with ε -caprolactone before copolymerization.

### Polyester Polyol (ii)

The polyester polyol can be prepared by reacting polybasic acids and polyhydric alcohols as main reactants and subjecting them to condensation reaction.

Examples of mono- and polybasic acids are aromatic acids and anhydrides, aliphatic acids and anhydrides, cycloaliphatic adds and anhydrides. Representative thereof are: phthalic anhydride, isophthalic acid, hexahydrophthalic anhydride, methylcyclohexyl anhydride, trimellitic anhydride, isononanoic acid, natural monoacids such as tall oil fatty acid, adipic acid, dodecane dioic acid and 1,4-cyclohexanedicarboxylic acid.

Examples of polyhydric alcohols are: glycerine, neopentylglycol, 1,6-hexane diol, 2,2-ethylbutyl propane diol, trimethylolpropane, monopentaerytritol, cyclohexane dimethanol and ethylene glycol.

A typical structure of a long chain diacid or diol is composed of a mixture of linear, cyclic and aromatic dimers and can be drawn as follows. It will be appreciated that significant amounts of acid and/or alcohol trimers can be included without adversely affecting the coatings.

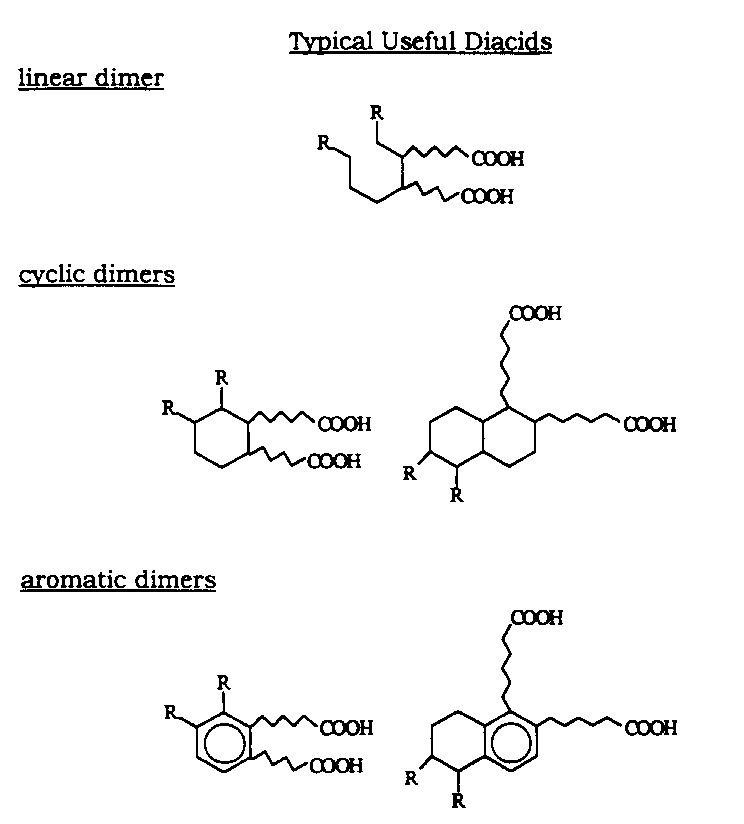

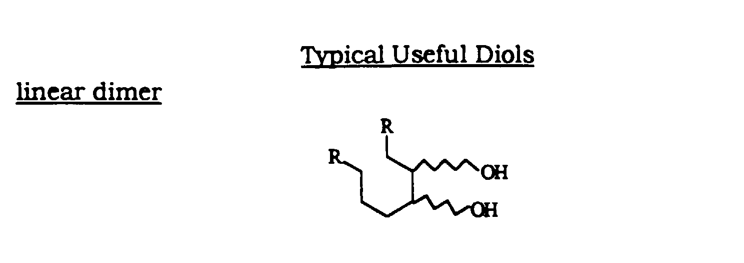

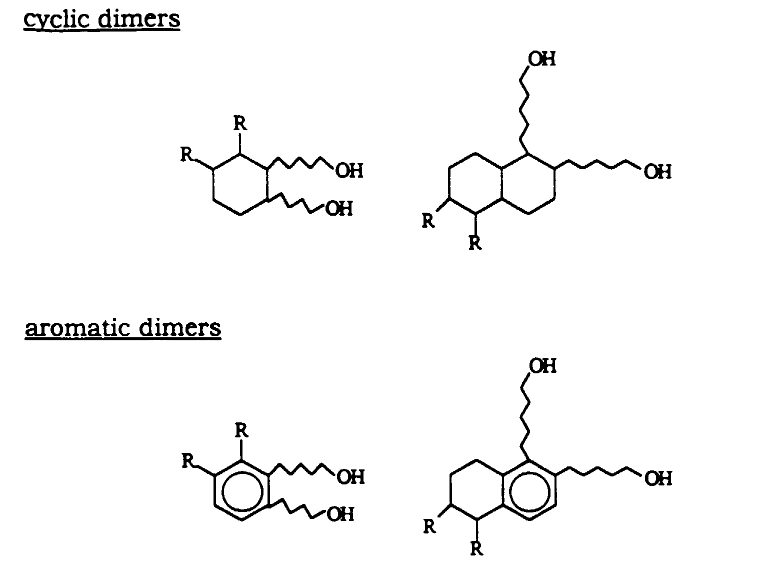

The polyester resin can be further modified with epoxyesters, epoxyethers, silane derivatives and isocyanates.

### The Crosslinking Agent (iii)

### Coating Formulation

The clearcoat formulation is preferably crosslinked with alkoxylated melamine formaldehyde resins. Such crosslinkers are prepared from melamine, formaldehyde and alcohol in various molar ratios and molecular weights. Typical alcohols are methanol, isobutanol and n-butanol. Alkoxylated melamine formaldehyde resins are commercially available.

The clearcoat formulation can also contain other crosslinkers such as blocked polyisocyanates to improve acid etch resistance. Blocked polyisocyanates are commercially available. Preferably, the methylethylketoxime blocked trimer of isophorone diisocyanate is used as auxiliary crosslinker.

In the clearcoat composition of the invention, leveling agents, rheology modifiers, ultraviolet absorbers, light stabilizers, curing catalysts can also be employed. Leveling agents are compounds that improve surface properties. Ultraviolet absorbers and light stabilizers include benzotriazole derivatives and hindered amine light stabilizers (HALS) sold under the trade name Tinuvin® by Ciba Geigy.

Curing catalysts can be strong acids such as sulfonic and phosphonic acids; metal salts of zinc and tin; amino derivatives such as dimethylethanol amine and triethyl amine. Rheology control agents include inorganic or organic materials. Inorganic rheology control agents include silica derivatives and bentonite clays. Organic rheology control agents are nonaqueous dispersions and diurea based particles such as obtained from the reaction of 2 moles of an amine with 1 mole of an isocyanate.

The clearcoat of the invention is thermosetting and typically applied wet-on-wet over a pigmented basecoat. The coating is preferably carried out by conventional surface coating technology which includes air-spraying, airless spraying and electrostatic spray-coating techniques. The clearcoating thickness is preferably 20 to 80 µm on a dry basis. Heat-curing is preferably conducted at 80° to 160°C for 10 to 40 minutes.

The composition of this invention has excellent adhesion to a variety of substrates (particularly metallic substrates) such as previously painted substrates, cold rolled steel, phosphatized steel, and steel coated with conventional primers by electrodeposition. The present composition can also be used to coat plastic substrates such as polyester reinforced fiberglass, reaction injection-molded urethanes and partially crystalline polyamides.

### Preparations of Acrylic Polyols

### Preparation 1

A conventional reaction vessel for acrylic resin production equipped with a stirrer, a thermometer and a reflux condenser was charged with 14 parts of an aromatic hydrocarbon mixture (Solvesso® 100). The mixture was heated at reflux with stirring and the following monomer mixture was added over 6 hours: 15 parts of styrene, 21 parts of butyl methacrylate, 9 parts of butyl acrylate, 15 parts of 2-hydroxyethyl acrylate, 3 parts of t-butylperacetate 50% solution in isododecane (Trigonox® FC50 (AKZO)) and 18 parts of hydrocarbon solvent (Solvesso® 100). After the 6 hour feed, 1 part of hydrocarbon solvent (Solvesso® 150) was added and the reactor mixture was kept at reflux for another 30 min. Finally, 4 parts of Solvesso® 150 was added. Test results on the resin solution:

| | |
|---|---|
| Solids Content | 60.9% |
| Viscosity | L+¼ (Gardner Holdt) |
| Acid Value | 3.6 |
| Hydroxyl value | 121 |
| Number Average M_{w} | 2100 |
| Weight Average M_{w} | 4900 |
| T_{g} (Calculated to the nearest °C by the Flory-Fox equation) | 11°C |

### Preparation 2

According to the procedure of Preparation 1, the reactor charge was 20 parts of xylene and a mixture of 24 parts of styrene, 12 parts of 2-ethylhexyl methacrylate, 12 parts of butyl methacrylate, 11.1 parts of 2-hydroxyethyl methacrylate, 0.9 parts of acrylic acid, 2 parts of t-butyl peroxy 3,3,5 trimethylhexanoate (Trigonox® 41S) and 3 parts of Solvesso® 100. These ingredients were fed over 4 hours followed by a rinse of 1 part Solvesso® 100.
The mixture was held 20 min after which another 0.1 part of Trigonox® 41S and 3.9 parts of Solvesso® 100 was added over 1 hour followed by a rinse with 1 part Solvesso® 100. The mixture was held for another 20 min and finally 9 parts of Solve® 100 was added.

Test results on the resin solution:

| | |
|---|---|
| Solids content | 61% |
| Viscosity | Z5 |
| Acid value | 12.3 |
| Hydroxyl Value | 89 |
| Number Average M_{w} | 5500 |
| Weight Average M_{w} | 13000 |
| T_{g} (calculated as in Preparation 1) | 48°C |

### Preparation 3

Preparation 2 was repeated replacing 2-ethylhexyl methacrylate with 2-ethylhexyl acrylate. Test results on the resin solution:

| | |
|---|---|
| Solids content | 60.8% |
| Viscosity | Z2¼ |
| Acid value | 13 |
| Hydroxyl Value | 89 |
| Number Average M_{w} | 5800 |
| weight Average M_{w} | 13000 |
| T_{g} (calculated) | 19°C |

### Preparation 4

Preparation 1 was repeated with the reactor charged with 10 parts of Solvesso® 100 and 22.38 parts of versatic acid monoepoxyester Cardura® E10 (Shell). To the refluxing mixture were added 21 parts of styrene, 9 parts of 2-hydroxyethyl methacrylate, 7.62 parts of acrylic acid, 1.5 parts of di-tertiarybutyl peroxide (Trigonox® B; AKZO) and 7.5 parts of Solvesso® 100 over a period of 6 hours. A rinse of 1 part of Solvesso® was added and the reactor content was held at reflux for 1 hour. Finally, 20 parts of butylacetate was added. Test results on the resin solution:

| | |
|---|---|
| Solids content | 61.9% |
| Viscosity | M |
| Acid value | 16.9 |
| Hydroxyl Value | 148 |
| Number Average M_{w} | 2300 |
| Weight Average M_{w} | 5200 |
| T_{g} (calculated) | 20°C |

### Preparation 5

Preparation 1 was repeated in which the reactor was charged with 9 parts of Solvesso® 100 and 7 parts of n-butanol. A mixture of 19.8 parts of styrene, 22.44 parts of 2-ethylhexyl acrylate, 17.16 parts of 2-hydroxyethyl methacrylate, 6.6 parts of gamma-methacryloxypropyl triethoxysilane (Dynasylan® MEMO-E HULS), 8.5 parts of Solvesso® 100 and 4.5 parts of 2,2'-azobis (methylbutyronitrile) (VAZO® 67) were added over 5 hours followed by a rinse with 1 part of Solvesso® 100. The reactor contents were kept 10 min at reflux after which 0.5 parts of VAZO® 67 dissolved in 1.5 parts Solvesso® 100 were added over 20 min followed by a rinse with 1 part of Solvesso® 100. The mixture was further held for 30 min at reflux and another 1 part of Solvesso® 100 was added. Test results on the resin solution:

| | |
|---|---|
| Solids content | 70.2% |
| Viscosity | Y |
| Hydroxyl Value | 112 |
| Number Average M_{w} | 2100 |
| Weight Average M_{w} | 5500 |
| T_{g} (calculated) | -4°C |

### PREPARATIONS OF POLYESTER POLYOLS

### Preparation 6

A flask was charged with 20.96 parts of hydrogenated dimer fatty acids (Pripol® 1009 Uniqema), 19.88 parts of 2,2-ethylbutyl-1,3-propane diol, 11.1 parts of trimethylolpropane and 21.97 parts of 1,4-cyclohexanedicarboxylic acid (1,4 CHDA). The temperature was raised from 160°C to 220°C over 4 hours while the water of condensation was removed. The mixture was held at 220°C until an acid value of 9-11 was reached. Afterwards the reactor contents were diluted with 32 parts of Solvesso® 100. Test results on the resin solution:

| | |
|---|---|
| Solids content | 68.8% |
| Viscosity | V |
| Acid value | 9.8 |
| Hydroxyl Value | 150 |
| Number Average M_{w} | 1800 |
| Weight Average M_{w} | 6100 |

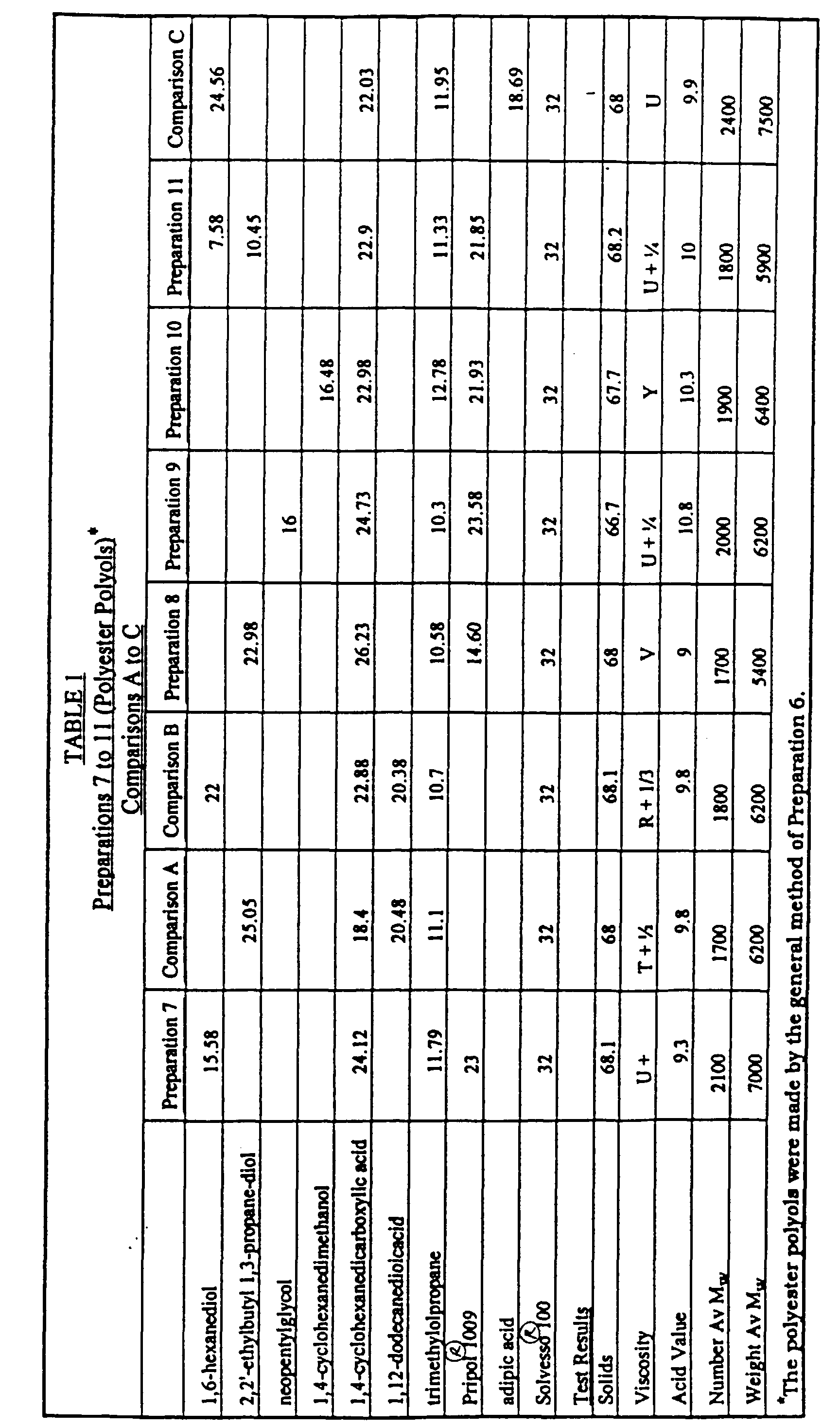

| Comparisons D, E and F | | | |
|---|---|---|---|
| | D | E | F |
| 1,6-hexanediol | 30.31 | 12.74 | 15.71 |
| 2,2-ethylbutyl, 1,3-propane diol | | 12.95 | 15.97 |
| trimethylolpropane | 6.05 | 12.66 | 6.68 |
| adipic acid | 19 | 17.82 | 17.78 |
| 1,4-cyclohexane dicarboxylic acid | 22.39 | 21 | 20.97 |
| Solvesso® 100 | 32 | 32 | 32 |

| Test Results | | | |
|---|---|---|---|
| Solids | 68.6 | 68.8 | 68.6 |
| Viscosity | N | U+1/3 | P |
| Acid Value | 9.9 | 10 | 10.5 |
| Number Av M_{w} | 2200 | 2200 | 2100 |
| Weight Av M_{w} | 6000 | 8300 | 6100 |

### Preparation 12

Preparation 6 was repeated using 15.5 parts of trimethylolpropane and 52.78 parts of Pripol® 1010 (Uniqema). The batch was held until an acid value of less than 1 was reached before adding 35 parts of Solvesso® 100. Test results:

| | |
|---|---|
| Solids content | 65.9% |
| Viscosity | Z3 |
| Acid value | 0.6 |
| Hydroxyl Value | 145 |
| Number Average M_{w} | 4600 |
| Weight Average M_{w} | 51000 |

### Preparation 13

To 100 parts of the polyester binder solution as in Preparation 12 was added 0.1 part of dibutyltindilaurate and the mixture was heated to 60°C. Then, 3.8 parts of 3-isocyanatopropyltrimethoxy silane was added followed by a rinse with 1 part of Solvesso® 100. The mixture was held at 60°C until the NCO band in IR had disappeared. Then, 1 part of n-butanol was added. The polyester polyols of Preparations 12 and 13 can be combined with any of components (i) and (iii) to prepare coating compositions of this invention. Test results on this polyester polyol showed the following:

| | |
|---|---|
| Solids content | 65.8% |
| Viscosity | Z4 |
| Acid value | 0.9 |
| Hydroxyl Value | 130 |
| Number Average M_{w} | 4300 |
| Weight Average M_{w} | 75300 |

### EXAMPLES 1 TO 6

A typical clearcoat formulation was prepared having the components shown below:

| | |
|---|---|
| acrylic polyol of Preparation 1 | 11.48 |
| acrylic polyol of Preparation 1 modified with 5% of an organic rheology control agent¹ | 24.522 |
| polyester polyol² | 18.051 |
| melamine formaldehyde | |
| Luwipal® 013 (BASF) resin | 17.155 |
| melamine formaldehyde | |
| Luwipal® LR8735 (BASF) resin | 6.743 |
| Tinuvin® 1130 (Ciba) | 0.788 |
| Tinuvin® 292 (Ciba) | 0.394 |
| Irganox® 1010 solution (Ciba) | 0.944 |
| Reomet® TTA solution (Ciba) | 0.147 |
| Silicone 017 solution (Bayer) | 0.458 |
| Solvesso® 150 | 6.422 |
| dodecylbenzenesulfonic acid blocked with 2-amino methylpropanol | 1.238 |
| Solvesso® 100 | 1.559 |
| butylcarbitol | 3.669 |
| xylene | 6.430 |

| | |
|---|---|
| ¹ Rheology control agent based on a diurea prepared from benzylamine and hexamethylene diisocyanate. | |
| ²Examples 1 to 6 are those wherein polyester polyols of Preparations 6 to 11, respectively, were used. | |

The clearcoat was applied wet-on-wet on a blue basecoat. The panel preparation and coating thickness were as follows:

| | |
|---|---|
| Substrate: | Act-Tru Cold roll steel B952 P60 DIW: MATT |
| Primer Surfacer | 30-35 microns DFT 30' at 145°C bake |
| Basecoat | ±15 µm DFT |
| Clearcoat | ±40-45 µm DFT Baking Base + clearcoat 30 min at 140-145°C |
| DFT = Dry Film Thickness. | |

After baking, the panels were rated for in-place properties such as gloss, adhesion, humidity, xylene-resistance, acid-resistance (H₂SO₄), chipping, hardness (Persoz, Fisher) and flexibility. The clearcoat formulations all passed typical original equipment manufacturers' specifications.

### Comparisons of Appearance And Scratch Performance vs. Coatings Without Component (ii)

The test results in Table 2 demonstrate the advantage of using dimer fatty acids in the polyester polyol which improves scratch performance and appearance. The appearance is rated visually in an appearance test which is equivalent for the strike-in resistance of the clearcoat on the basecoat.

The scratch performance test was run by subjecting the panel to 60 cycles of a rotary synthetic brush (polyethylene) combined with a well-defined abrasive solution. The scratch performance indicates the percent of gloss loss after scratching. Scale of appearance in descending order is excellent, very good, good-very good, good, fair-good, fair, poor. The important consideration is that both appearance and scratch resistance must be in balance. Thus, in Table 2, scratch performances wherein there is 22% of gloss loss can be tolerated when the appearance remains "good-very good". However, even a 5% loss is unacceptable when the appearance is only "fair".

**TABLE 2**

| Example/Comparison | Appearance | Scratch Performance (%) |
|---|---|---|
| Example 1 | Excellent | -15 |
| Example 2 | Very Good | -3 |
| Example 3 | Good-Very Good | -22 |
| Example 4 | Excellent | -15 |
| Example 5 | Very Good | -20 |
| Example 6 | Excellent | -10 |
| Comparison (acrylic polyol of Preparation 1; no polyester polyol) | Fair-Good | -30 |
| Comparison A | Fair-Good | -9 |
| Comparison B | Fair | -5 |
| Comparison C | Poor | -- |
| Comparison D | Poor | -- |
| Comparison E | Poor | -- |
| Comparison F | Poor | -- |

## Claims

1. A coating composition of a crosslinkable binder in an organic solvent, the binder comprising the following components based on total weight of binder:
(i) 15 to 70 percent of an acrylic polyol having a weight average molecular weight of 2,500 to 40,000; a hydroxyl value of 50 to 180 mg KOH/g; and a glass transition temperature of between -30 to 70°C;
(ii) 5 to 60 percent of an optionally substituted polyester polyol having a weight average molecular weight of 2,000 to 80,000; and a hydroxyl value of 50 to 220 mg KOH/g; the optional substituent selected from at least one member of the group trialkoxysilyl and urethane;
the polyol comprising at least 10 percent by weight of the hydrogenated reaction product of at least one of:
a) dimer fatty acid and polyol,
b) polyacid and dimer alcohol, and
c) dimer fatty acid and dimer alcohol,
wherein said dimer fatty acid and said dimer alcohol have at least 34 carbon atoms and said reaction product has at least two groups selected from acid and alcohol functionalities; and
(iii) 10 to 60 percent of a crosslinking agent selected from at least one of an alkoxylated melamine formaldehyde adduct and a polyisocyanate;
with the exception of coating compositions wherein component (ii) of the binder has been obtained by reacting the following components:
(1) 0 to 30% by moles of one or more glycidyl esters of α,α-dialkylsubstituted monocarboxylic acids;
(2) 10 to 40% by moles of one or more 2,2-dialkylalkane diols;
(3) 10 to 30% by moles of one or more polyols having at least one secondary OH group in their molecules;
(4) 20 to 50% by moles of one or more aliphatic and/or cycloaliphatic dicarboxylic acids having less than 16 carbon atoms or anhydrides thereof;
(5) 5 to 30% by moles of one or more dimer fatty acids and/or dimer diols and/or epsilon-caprolactone;
(6) 1 to 15% by moles of one or more hydroxycarboxylic acids having at least one hydroxyl group and at least one carboxylic group in their molecules;
(7) 0 to 3% by moles of one or more alpha, beta-unsaturated dicarboxylic acids and anhydrides thereof;
the total of components (1) to (7) being 100% by moles.

2. A composition according to Claim 1 in which the acrylic polyol has a molecular weight of 3,000 to 10,000; a hydroxyl value of 80 to 150; and a glass transition temperature of -10 to 50°C.

3. A composition according to Claim 1 in which the acrylic polyol contains at least one trialkoxysilyl group.

4. A composition according to Claim 1 in which the polyester polyol has a molecular weight of 2,500 to 15,000; a hydroxyl value of 100 to 170; and 30 to 60 percent, by weight of polyester polyol, of hydrogenated reaction product selected from a), b) and c).

5. A composition according to Claim 1 in which the polyester polyol contains substituents selected from at least one member of the group trialkoxysilyl and urethane.

6. A composition according to Claim 1 in a two-package system wherein one package comprises the acrylic and polyester polyols and the other comprises an unblocked polyisocyanate.

7. A composition according to Claim 1 which is a topcoat.

8. A composition according to Claim 7 which is a clearcoat.

## Patentansprüche

1. Beschichtungszusammensetzung aus einem vernetzbaren Bindemittel in einem organischen Lösungsmittel, wobei das Bindemittel die folgenden Komponenten, bezogen auf das Gesamtgewicht des Bindemittels, umfaßt:
(i) 15 bis 70 Prozent eines Acrylpolyols mit einer massegemittelten Molekülmasse von 2500 bis 40000; einer Hydroxylzahl von 50 bis 180 mg KOH/g und einer Glasübergangstemperatur zwischen -30 bis 70°C;
(ii) 5 bis 60 Prozent eines optional substituierten Polyesterpolyols mit einer massegemittelten Molekülmasse von 2000 bis 80000 und einer Hydroxylzahl von 50 bis 220 mg KOH/g; wobei der optionale Substituent ausgewählt ist aus mindestens einem Mitglied der Gruppe Trialkoxysilyl und Urethan;
wobei das Polyol mindestens 10 Gewichtsprozent des hydrierten Reaktionsprodukts von mindestens einer der Substanzen
(a) Dimerfettsäure und Polyol,
(b) Polysäure und Dimeralkohol und
(c) Dimerfettsäure und Dimeralkohol umfaßt, wobei die Dimerfettsäure und der Dimeralkohol mindestens 34 Kohlenstoffatome aufweisen, und das Reaktionsprodukt mindestens zwei Gruppen aufweist, die aus Säure- und Alkohol-Funktionalitäten ausgewählt sind; und
(iii) mindestens 10 bis 60 Prozent eines Vernetzungsmittels, ausgewählt aus mindestens einer der Substanzen alkoxyliertes Melaminformaldehyd-Addukt und Polyisocyanat;
mit der Ausnahme von Beschichtungszusammensetzungen, in denen die Komponente (ii) des Bindemittels durch Umsetzen der folgenden Komponenten erhalten wurde:
(1) 0 bis 30 Mol% eines oder mehrerer Glycidylester von α,α-Dialkyl-substituierten Monocarbonsäuren;
(2) 10 bis 40 Mol% eines oder mehrerer 2,2-Dialkylalkandiole;
(3) 10 bis 30 Mol% eines oder mehrerer Polyole mit mindestens einer sekundären OH-Gruppe in den Molekülen;
(4) 20 bis 50 Mol% einer oder mehrerer aliphatischer und/oder cycloaliphatischer Dicarbonsäuren mit weniger als 16 Kohlenstoffatomen oder ihrer Anhydride;
(5) 5 bis 30 Mol% einer oder mehrerer Dimerfettsäuren und/oder Dimerdiole und/oder von epsilon-Caprolacton;
(6) 1 bis 15 Mol% eines oder mehrerer Hydroxycarbonsäuren mit mindestens einer Hydroxylgruppe und mindestens einer Carboxylgruppe in den Molekülen;
(7) 0 bis 3 Mol% einer oder mehrerer alpha,beta-ungesättigter Dicarbonsäuren und ihrer Anhydride;
wobei die Komponenten (1) bis (7) insgesamt 100 Mol% ausmachen.

2. Zusammensetzung nach Anspruch 1, wobei das Acrylpolyol ein Molekulargewicht von 3000 bis 10000; eine Hydroxylzahl von 80 bis 150 und eine Glasübergangstemperatur von -10 bis 50°C aufweist.

3. Zusammensetzung nach Anspruch 1, wobei das Acrylpolyol mindestens eine Trialkoxysilylgruppe enthält.

4. Zusammensetzung nach Anspruch 1, wobei das Polyesterpolyol ein Molekulargewicht von 2500 bis 15000; eine Hydroxylzahl von 100 bis 170 und etwa 30 bis 60 Prozent, bezogen auf das Gewicht des Polyesterpolyols, eines hydrierten Reaktionsprodukts, ausgewählt aus a), b) und c), aufweist.

5. Zusammensetzung nach Anspruch 1, wobei das Polyesterpolyol Substituenten enthält, die ausgewählt sind aus mindestens einem Mitglied der Gruppe Trialkoxysilyl und Urethan.

6. Zusammensetzung nach Anspruch 1 in einem Zweipackungssystem, wobei eine Packung die Acryl- und Polyesterpolyole umfaßt und die andere ein unblockiertes Polyisocyanat umfaßt.

7. Zusammensetzung nach Anspruch 1, bei der es sich um einen Decküberzug handelt.

8. Zusammensetzung nach Anspruch 7, bei der es sich um einen klaren Überzug handelt.

## Revendications

1. Composition de revêtement d'un liant réticulable dans un solvant organique, le liant comprenant les composants suivants sur base du poids total de liant :
(i) 15 à 70% d'un polyol acrylique ayant un poids moléculaire moyen en poids de 2500 à 40 000 ; un indice hydroxyle de 50 à 180 mg KOH/g ; et une température de transition vitreuse entre -30 à 70°C ;
(ii) 5 à 60% d'un polyesterpolyol facultativement substitué ayant un poids moléculaire moyen en poids de 2000 à 80 000 ; et un indice hydroxyle de 50 à 220 mg KOH/g ; le substituant facultatif étant choisi parmi au moins un membre du groupe du trialkoxysilyle et de l'uréthanne ;
le polyol comprenant au moins 10% en poids du produit hydrogéné de la réaction d'au moins un des :
a) acide gras dimère et polyol,
b) polyacide et alcool dimère, et
c) acide gras dimère et alcool dimère,
dans lequel ledit acide gras dimère et ledit alcool dimère ont au moins 34 atomes de carbone et ledit produit de la réaction a au moins deux groupements choisis parmi les fonctionnalités acide et alcool ; et
(iii) 10 à 60% d'un agent de réticulation choisi parmi au moins un adduit de mélamine-formaldéhyde alkoxylé et un polyisocyanate;
à l'exception des compositions de revêtement dans lesquelles le composant (ii) du liant a été obtenu par réaction des composants suivants :
(1) 0 à 30% par mole de un ou plusieurs esters de glycidyle d'acides monocarboxyliques α,α-dialkyl-substitués ;
(2) 10 à 40% par mole de un ou plusieurs 2,2-dialkylalcanediols ;
(3) 10 à 30% par mole de un ou plusieurs polyols ayant au moins un groupement OH secondaire dans leurs molécules ;
(4) 20 à 50% par mole de un ou plusieurs acides dicarboxyliques aliphatiques et/ou cycloaliphatiques ayant moins de 16 atomes de carbone ou anhydrides de ceux-ci ;
(5) 5 à 30% par mole de un ou plusieurs acides gras dimères et/ou diols dimères et/ou ε-caprolactone ;
(6) 1 à 15% par mole de un ou plusieurs acides hydroxycarboxyliques ayant au moins un groupement hydroxyle et au moins un groupement carboxylique dans leurs molécules ;
(7) 0 à 3% par mole de un ou plusieurs acides dicarboxyliques α,β-insaturés et les anhydrides de ceux-ci;
le total des composants (1) à (7) étant 100% par mole.

2. Composition selon la revendication 1, dans laquelle le polyol acrylique a un poids moléculaire de 3000 à 10 000 ; un indice hydroxyle de 80 à 150 ; et une température de transition vitreuse de -10 à 50°C.

3. Composition selon la revendication 1, dans laquelle le polyol acrylique contient au moins un groupement trialkoxysilyle.

4. Composition selon la revendication 1, dans laquelle le polyesterpolyol a un poids moléculaire de 2500 à 15 000 ; un indice hydroxyle de 100 à 170 ; et 30 à 60%, en poids de polyesterpolyol, de produit hydrogéné de la réaction choisie parmi a), b) et c).

5. Composition selon la revendication 1, dans laquelle le polyesterpolyol contient des substituants choisis parmi au moins un membre du groupe du trialkoxysilyle et de l'uréthanne.

6. Composition selon la revendication 1, dans un système à deux ensembles dans laquelle un ensemble comprend les polyols acryliques et les polyesterpolyols et l'autre comprend un polyisocyanate non bloqué.

7. Composition selon la revendication 1, qui est une couche de finition.

8. Composition selon la revendication 7, qui est une couche transparente.
